# EUROPEAN PATENT SPECIFICATION

(11) **EP 3 574 600 B1**
(45) Date of publication and mention of the grant of the patent: **13.10.2021**
(21) Application number: 18703635.5
(22) Date of filing: 25.01.2018
(51) Int. Cl.: H04L 1/18

(54) **COMMUNICATION PROTOCOL PACKET RETRANSMISSION**
NEUÜBERTRAGUNG EINES KOMMUNIKATIONSPROTOKOLLPAKETS
RETRANSMISSION DE PAQUETS DE PROTOCOLE DE COMMUNICATION

(30) Priority: 25.01.2017 US 201762450342 P
(43) Date of publication of application: 04.12.2019
(73) Proprietor: Telefonaktiebolaget LM Ericsson (publ), 164 83 Stockholm (SE)
(72) Inventor: MIGAULT, Daniel, Montreal, Quebec H2R 2S7 (CA); LEMIEUX, Yves, Kirkland, Québec H9H 4M1 (CA)
(74) Representative: Ericsson
(86) International application number: PCT/IB2018/050464
(87) International publication number: WO 2018/138672

(56) References cited:
- US-A1- 2007 214 399
- Joel Reardon ET AL: "Improving Tor using a TCP-over-DTLS Tunnel", , 25 May 2009 (2009-05-25), XP055082393, Retrieved from the Internet: URL:http://www.cypherpunks.ca/~iang/pubs/T orTP.pdf [retrieved on 2013-10-03]

## Description

### TECHNICAL FIELD

The disclosure relates to wireless communications, and in particular, to retransmission of missing packets.

### BACKGROUND

Packet exchange in a network typically incorporates some form of packet retransmission due to lost or missing packets. In particular, in transport control protocol (TCP), reliability is achieved by a sender detecting lost data and retransmitting the lost data. TCP uses two primary techniques to identify loss. Retransmission timeout (RTO) and duplicate cumulative acknowledgements (DupAcks).

### Timeout based retransmission or RTO

Whenever a packet is sent by an endpoint node/sender such as a server endpoint node, the endpoint node sets a timer that is a conservative estimate of when the packet will be acknowledged (ACKed) by the opposite endpoint node such as a wireless device endpoint node in the communication. If the packet is not ACKed by the end of the timer, the packet is retransmitted. Note that the timer is reset every time the sender receives an acknowledgement. This means that the retransmit timer is triggered only when the endpoint node has received no acknowledgement from the opposite endpoint node for a long time. Typically, the timer value is set to smoothedRTT + max (G, 4*RTTvariation) where G is the clock granularity and RTT stands for Round Trip Time as TCP uses retransmission from the endpoint nodes, i.e., from endpoint node/sender to the opposite endpoint node. Further, in case a retransmit timer has triggered and still no acknowledgement has been received, the next timer value is set to twice the previous value (up to a predefined threshold). Among other things, the timer settings help defend against a "man in the middle" denial of service attack that tries to fool the endpoint node/sender into having too many retransmissions if the endpoint node/sender infers that data has been lost in the network using one of the two techniques described above, where the endpoint node/sender would retransmit the data to the opposite endpoint node.

### Timeout packet based retransmission with TCP

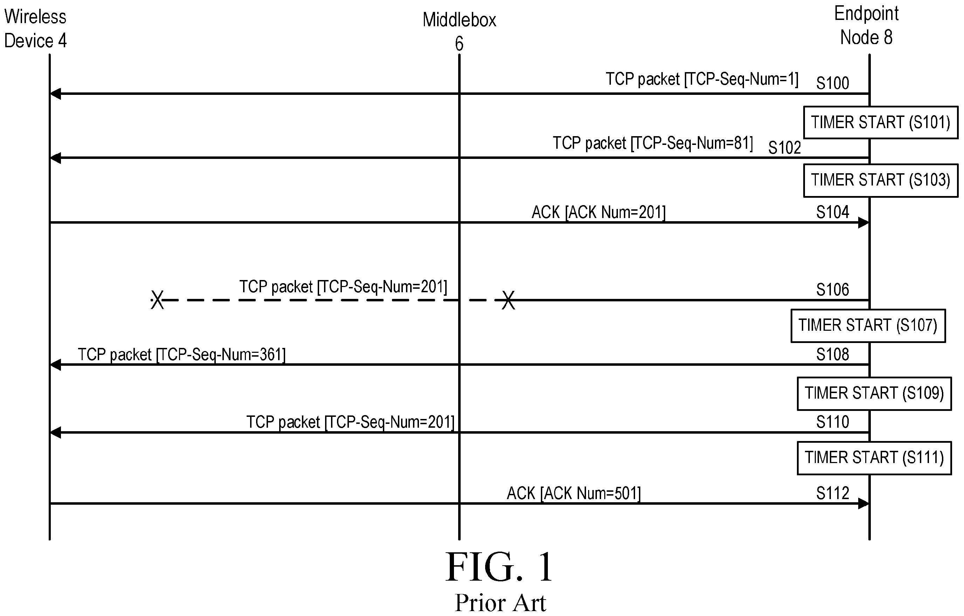

FIG. 1 illustrates a flow diagram of a Timeout Retransmission mechanism with TCP. The flow diagram includes wireless device 4, middlebox 6 such as an internet service provider, and endpoint node 8, i.e., sender. Endpoint node 8 sends a TCP packet having a first segment number of one and segment length one, i.e., transmits TCP packet [TCP-Seq-Num=1], that is destined for wireless device 4 (S100). The TCP-Seq-Number is a serial number that increments sequentially and is used to find the sequence between packets. Each time a packet is sent, a timer is initiated, i.e., TIMER START, at endpoint node 8 and then is reset each time an ACK is received (S101). Endpoint node 8 keeps transmitting TCP packets such as TCP segment 2, i.e., TCP packet [TCP-Seq-Num=81] (S102). Endpoint node 8 initiates a TIMER START (S103).

Upon receipt of the TCP packet having TCP Segment 2, wireless device 4 sends back and acknowledges such as ACK [ACK Num=201] (S104). The acknowledgment number indicates the expected next Sequence Number to be received, which in this example, is 201. Endpoint node 8 transmits packets such as a packet including TCP segments 3, but this packet and segment are lost before reaching wireless device 4 as indicated by the "x" in FIG. 1, where the packet may go lost or missing before or after middlebox 6 (S106). Endpoint node 8 keeps transmitting packets such as a packet including transmission of TCP segment 4, i.e., TCP packet [TCP-Seq-Num=361] (S108). This segment is not acknowledged as ACKs are sent when all segments mentioned in previous ACK have been received. Endpoint node 8 initiates a TIMER START (S109).

Once the timer expires, i.e., TIMEOUT, endpoint node 8 retransmits segment 3, i.e., TCP packet [TCP-Seq-Num=201] where TIMEOUT is typically function of the RTT (S110). Wireless device 4 acknowledges receipt of the retransmission such as by transmitting a packet, to endpoint node 8, including an acknowledgement such as ACK [ACK Num=501] (S112). In other words, endpoint node 8 initiates retransmission of a lost or missing packet based on the expiration of a timer.

In many retransmission mechanisms, the goal is to have a best guess of the RTT. For example, the initial RTT is set to 3000 ms in a MICROSOFT WINDOWS 7 based entity. RTT can be still very long. In addition, the TIMEOUT may be interpreted as a congestion condition. In any case, the "last mile" in the communication path from middlebox 6 to wireless device 4 is likely to affect the global communications as retransmission based signaling uses up global communication resources and/or burdens the network with added traffic.

### DupAck based retransmission

Another technique to identify and deal with lost or missing packets is DupAck based transmission. If a single packet (for example, packet 100) in a stream is lost, then the receiver at wireless device 4, i.e., the other/opposite endpoint node, cannot acknowledge packets above 100 because wireless device 4 uses cumulative ACKs. Hence, the receiver acknowledges packet 100 again on the receipt of another data packet. This duplicate acknowledgement is used as a signal for packet loss. That is, if the sender such as endpoint node 8 receives three duplicate acknowledgements, endpoint node 8 retransmits the last unacknowledged packet. A threshold of three is used because the network may reorder packets causing duplicate acknowledgements. This threshold helps avoid spurious retransmissions due to reordering. In other words, endpoint node 8 initiates retransmission based on receipt of a predefined number of duplicate acknowledgements from wireless device 4.

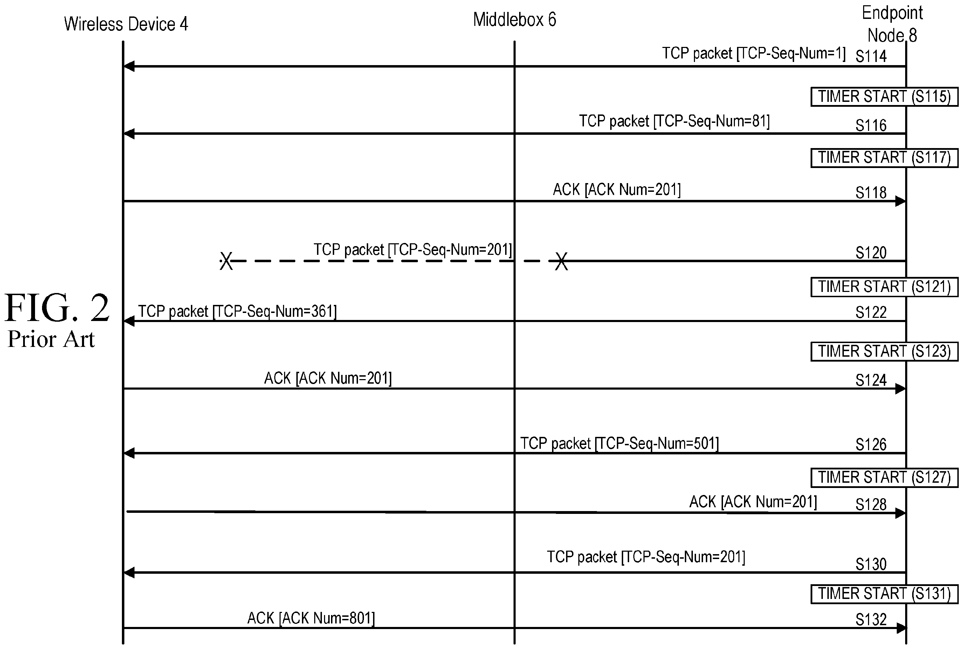

FIG. 2 illustrates a flow diagram of the signaling involved in TCP duplicate ACK retransmission. Endpoint node 8 sends a packet destined for wireless device 4 where the packet including TCP segment where the first segment number is one and the segment length is one, e.g., TCP packet [TCP-Seq-Num=1] (S114). Endpoint node 8 initiates a timer, i.e., TIMER START (S115). Each time a packet with a TCP segment is sent, the timer is initiated and is reset each time an ACK is received. Endpoint node 8 transmits a packet including TCP segment 2, e.g., TCP packet [TCP-Seq-Num=81] (S116). Endpoint node 8 initiates a TIMER START (S117). Upon receipt of the TCP Segment 2, wireless device 4 sends back a packet including an ACK (S118). The acknowledgment number indicates the expected next Sequence Number to be received, which in this example, is 201, e.g., ACK [ACK Num=201].

Endpoint node 8 transmits a packet including TCP segment 3, e.g., TCP packet [TCP-Seq-Num=201], destined for wireless device 4, but this TCP segment is lost as indicated by the "x" in FIG. 2 (S120). Endpoint node 8 initiates a TIMER START (S121). Endpoint node 8 transmits a packet including TCP Segment 4, e.g., TCP packet [TCP-Seq-Num=361] (S122). Endpoint node 8 initiates a TIMER START (S123). However, TCP segment 4 is not acknowledged as an ACK is sent when specific TCP segments have been received. Wireless device 4 detects that TCP segment 4 but not TCP segment 3 has been received such that wireless device 4 transmits a duplicate ACK (S124). The duplication ACK, in this example, is ACK [ACK Num= 201].

Endpoint node 8 transmits a packet including TCP segment 5, e.g., TCP packet [TCP-Seq-Num=501] (S126). Endpoint node 8 initiates a TIMER START (S127). This TCP segment is not acknowledged as ACKs are sent when all segments have been received such as until the segment mentioned in the ACK has been received. Wireless device 4 transmits a third ACK, i.e., another duplicate ACK, as TCP segment 3 still has not been received (S128). In this example, the third acknowledgement is ACK [ACK Num=201]. Upon receipt of the third ACK, endpoint node 8 retransmits a TCP packet including TCP segment 3, e.g., TCP packet [TCP-Seg-Num=201] (S130). Endpoint node 8 initiates a TIMER START (S131). Wireless device 4 receives retransmitted TCP segment 3 and acknowledges receipt of TCP segments 3, 4 and 5, e.g., transmits ACK [ACK Num=801] (S132).

However, retransmission with TCP is not without issues. In particular, the TCP retransmission mechanisms describes above rely on retransmission of TCP segments from endpoint node 8, which in some instances can equate to a long RTT as there may be many logical and/or physical node between endpoint node 8 and wireless device 4. Further, TCP retransmission relies on endpoint node 8 to initiate retransmission such as based on retransmission timeout or DupAcks, as described above, which may further add to the retransmission time.

Document US 2007/0214399 A1 discloses an apparatus and method using an Automatic Repeat reQuest (ARQ) in a Broadband Wireless Access (BWA) communication system. Thereby, in a transmitting method of a wireless communication system, a packet is created by a Media Access Conrol (MAC) layer and transmitted to a physical layer. Based on the transmitted packet, the physical layer generates a Hybrid-ARQ (HARQ) burst and transmits it, whereby the physical layer transmits a HARQ ending signal to the MAC when HARQ transmission is discontinued and whereby the MAC layer drives an ARQ retransmission timer for the packet in response to the HARQ ending signal.

Document "Improving tor using a TCP-over-DTLS tunnel", Joel Reardon et al., Proceedings of the 18th conference on USENIX security symposium, August 2009, pp 119-134, discloses the use of TCP over DTLS.

### SUMMARY

Some embodiments advantageously provide a method and system for retransmission of missing packets facilitated by coordination between protocol layers.

According to one aspect of the disclosure, an endpoint node according to independent claim 1 is provided.

According to one embodiment of this aspect, if the determination is made that retransmission of the missing packet using the communication layer is successful, ceasing retransmission of the missing packet using the transport layer. According to one embodiment of this aspect, the detection of the missing packet includes: monitoring a plurality of transport layer packets; detecting a sequence number of at least one of the plurality of transport packets; and determining the missing packet occurred based on the detected sequence number of at least one of the plurality of transport layer packets.

According to one embodiment of this aspect, the temporarily suspending of at least a portion of signaling associated with retransmission of the missing packet using the transport layer includes notifying the communication layer that retransmission using the communication layer is expected. According to one embodiment of this aspect, the detection of the missing packet includes: monitoring a plurality of communication layer packets; detecting a sequence number of at least one of the plurality of communication layer packets; and determining the missing packet occurred based on the detected sequence number of at least one of the plurality of communication layer packets.

According to one embodiment of this aspect, the temporarily suspending of at least a portion of signaling associated with retransmission of the missing packet using the transport layer includes the communication layer notifying the transport layer that retransmission using the communication layer will be attempted. According to one embodiment of this aspect, the processing circuitry is further configured to: in response to determining retransmission of the missing packet using the communication layer is unsuccessful, cause the communication layer to notify the transport layer that the retransmission of the missing packet using the communication layer was unsuccessful. According to one embodiment of this aspect, the temporarily suspending of at least of portion of signaling associated with retransmission of the missing packet using the transport layer includes temporarily suspending transmission of duplicate acknowledgments to the other endpoint node.

According to another aspect of the disclosure, a method for an endpoint node according to independent claim 8 is provided.

According to one embodiment of this aspect, if the determination is made that retransmission of the missing packet using the communication layer is successful, ceasing retransmission of the missing packet using the transport layer. According to one embodiment of this aspect, the detection of the missing packet includes: monitoring a plurality of transport layer packets; detecting a sequence number of at least one of the plurality of transport packets; and determining the missing packet occurred based on the detected sequence number of at least one of the plurality of transport layer packets.

According to one embodiment of this aspect, the temporarily suspending of at least a portion of signaling associated with retransmission of the missing packet using the transport layer includes notifying the communication layer that retransmission using the communication layer is expected. According to one embodiment of this aspect, the detection of the missing packet includes: monitoring a plurality of communication layer packets; detecting a sequence number of at least one of the plurality of communication layer packets; and determining the missing packet occurred based on the detected sequence number of at least one of the plurality of communication layer packets. According to one embodiment of this aspect, the temporarily suspending of at least a portion of signaling associated with retransmission of the missing packet using the transport layer includes the communication layer notifying the transport layer that retransmission using the communication layer will be attempted.

According to one embodiment of this aspect,in response to determining retransmission of the missing packet using the communication layer is unsuccessful, the communication layer is caused to notify the transport layer that the retransmission of the missing packet using the communication layer was unsuccessful. According to one embodiment of this aspect, the temporarily suspending of at least the portion of signaling associated with retransmission of the missing packet using the transport layer includes temporarily suspending transmission of duplicate acknowledgments to the other endpoint node.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a signaling diagram for detecting lost TCP packets based on a timeout retransmission mechanism as is known in the art;
FIG. 2 is a signaling diagram for detecting lost TCP packets based on duplicate cumulative acknowledgments retransmission as is known in the art;
FIG. 3 an exemplary system for coordinating retransmission of one or more packets in accordance with the principles of the disclosure;
FIG. 4 is a block diagram of a TCP proxy to a TCP stack operating within a kernel in accordance with the principles of the disclosure;
FIG. 5 is a flow diagram of an exemplary embodiment of communication protocol retransmission coordinated by the communication protocol in accordance with the principles of the disclosure;
FIG. 6 is a flow diagram of one embodiment of the process of device code for communication protocol coordinated retransmission in accordance with the principles of the disclosure;
FIG. 7 is a flow diagram of another embodiment of the process of device code for transport protocol coordinated retransmission in accordance with the principles of the disclosure;
FIG. 8 is a flow diagram of an exemplary coordination process of coordination code for coordinating interaction between a communication layer and a transport layer for retransmission in accordance with the principles of the disclosure;
FIG. 9 is a block diagram of another exemplary embodiment of device endpoint node in accordance with the principles of the disclosure;
FIG. 10 is a block diagram of another exemplary embodiment of middlebox 14 in accordance with the principles of the disclosure; and
FIG. 11 is a block diagram of another exemplary embodiment of endpoint node in accordance with the principles of the disclosure.

### DETAILED DESCRIPTION

Before describing in detail exemplary embodiments that are in accordance with the disclosure, it is noted that the embodiments reside primarily in combinations of endpoints nodes/middleboxes components and processing steps related to retransmission of missing packets facilitated by coordination of protocol layers. As used herein, an endpoint node such as a server endpoint node, device endpoint node, etc., refers to an end point node of a main communication such as a TCP session over, for example, UDP/SPUD/DTLS, while the middlebox refers to an end point node that may be part of a retransmission exchange but is not an end point node of a retransmitted communication. In this disclosure, "endpoint" and "endpoint node" may be used interchangeably, where "endpoint" refers to a communication endpoint operating on a computer system, and the disclosure refers to this "endpoint" as an "endpoint node."

Accordingly, components have been represented where appropriate by conventional symbols in drawings, showing only those specific details that are pertinent to understanding the embodiments of the disclosure so as not to obscure the disclosure with details that will be readily apparent to those of ordinary skill in the art having the benefit of the description herein.

As used herein, relational terms, such as "first," "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

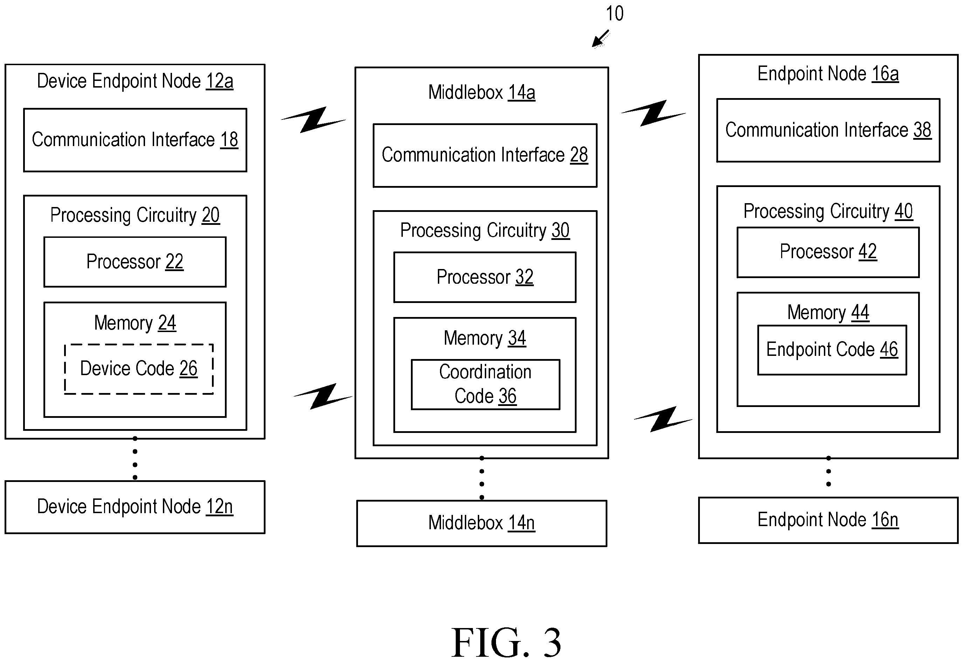

Referring now to drawing figures in which like reference designators refer to like elements there is shown in FIG. 3 an exemplary system for coordinating retransmission of one or more packets. System 10 includes one or more device endpoint nodes 12a-12n and one or more middleboxes 14a-14n and one or more endpoints nodes 16a-16n, in communication with each other via one or more communication networks, paths and/or links using one or more communication protocols such as a transport protocol providing a transport layer or first layer, and a communication protocol providing a communication layer or second layer (different from the first layer). The transport protocol being different from the communication protocol. In one or more embodiments, communication layer is a layer configured to use sequence numbers in messaging. In one or more embodiments, the communication protocol is an encryption protocol for providing an encryption layer. In one or more embodiments, a security protocol used may be an encryption protocol. In the invention the transport protocol is a transport control protocol (TCP) for providing a TCP layer, and the communication protocol is a Datagram Transport Layer Security (DTLS) protocol for providing a DTLS layer. The scope of protection is defined by the appended independent claims. Throughout the description, any references to embodiments and aspects not falling within the scope of those claims are to be regarded as referring to related examples useful to understanding the invention. Throughout the description (e.g in the next paragraph) the word "embodiments" is sometimes used to refer to other protocol combinations than TCP over DTLS (e.g. TCP over UDP). Any other such examples are not part of the present invention but might be regarded nevertheless as useful as related information.

In one or more embodiments, the main communication between device endpoint node 12 and endpoint node 16 is a TCP session over, for example, UDP/SPUD/DTLS, where both device endpoint node 12 and endpoint node 16 are end points of this main communication. The middlebox 14 is not an end point node of this main communication. Middlebox 14 is an end point node of the retransmission exchange, but is not an end point node of the retransmitted communication, as described herein. In other words, middlebox 14 is an end point node of the retransmission exchange but is only an intermediate point along the transmission path from the device endpoint node 12 and the endpoint node 16.

As used herein, device endpoint node 12 may be any one of device endpoint nodes 12a-12n. Device endpoint node 12 includes one or more communication interfaces 18 for communication with one or more other device endpoint node 12, middlebox 14, endpoint node 16 and/or other elements of system 10. In one or more embodiments, communication interface 18 includes one or more transmitters and/or one or more receivers. Device endpoint node 12 includes processing circuitry 20. Processing circuitry 20 includes processor 22 and memory 24. In addition to a traditional processor and memory, processing circuitry 20 may comprise integrated circuitry for processing and/or control, e.g., one or more processors and/or processor cores and/or FPGAs (Field Programmable Gate Array) and/or ASICs (Application Specific Integrated Circuitry). Processor 22 may be configured to access (e.g., write to and/or reading from) memory 24, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory). Such memory 24 may be configured to store code executable by processor 22 and/or other data, e.g., data pertaining to communication, e.g., configuration and/or address data of nodes, etc.

Processing circuitry 20 may be configured to control any of the methods and/or processes described herein and/or to cause such methods, signaling and/or processes to be performed, e.g., by device endpoint node 12. Processor 22 corresponds to one or more processors 22 for performing device endpoint node 12 functions described herein. Device endpoint node 12 includes memory 24 that is configured to store data, programmatic software code and/or other information described herein. In one or more embodiments, memory 24 is configured to store device code 26. For example, device code 26 includes instructions that, when executed by processor 22, causes processor 22 to perform the signaling describe herein with respect to device endpoint node 12.

Device endpoint node 12 may be a radio communication device, wireless device endpoint node, mobile endpoint node, sensor device, target device, device-to-device wireless device, user equipment (UE), machine type wireless device or wireless device capable of machine to machine communication, a sensor equipped with wireless device, tablet, mobile terminal, mobile telephone, laptop, computer, appliance, automobile, smart phone, laptop embedded equipped (LEE), laptop mounted equipment (LME), USB dongle and customer premises equipment (CPE), among other devices that can communicate radio or wireless signals as are known in the art.

Middlebox 14 includes one or more communication interfaces 28 for communication with one or more other middleboxes 14, device endpoint nodes 12, endpoint node 16 and/or other elements of system 10. In one or more embodiments, middlebox 14 is a physical and/or logical entity logically located between device endpoint node 12 and endpoint node 16. In one or more embodiments, middlebox 14 may be an endpoint node such as an endpoint node of retransmission or other exchange, i.e., a different type of endpoint node than device endpoint node 12 and endpoint node 16, as described herein.

In one or more embodiments, communication interface 28 includes one or more transmitters and/or one or more receivers. Middlebox 14 includes processing circuitry 30. Processing circuitry 30 includes processor 32 and memory 34. In addition to a traditional processor and memory, processing circuitry 30 may comprise integrated circuitry for processing and/or control, e.g., one or more processors and/or processor cores and/or FPGAs (Field Programmable Gate Array) and/or ASICs (Application Specific Integrated Circuitry). Processor 32 may be configured to access (e.g., write to and/or reading from) memory 34, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory). Such memory 34 may be configured to store code executable by processor 32 and/or other data, e.g., data pertaining to communication, e.g., configuration and/or address data of nodes, etc.

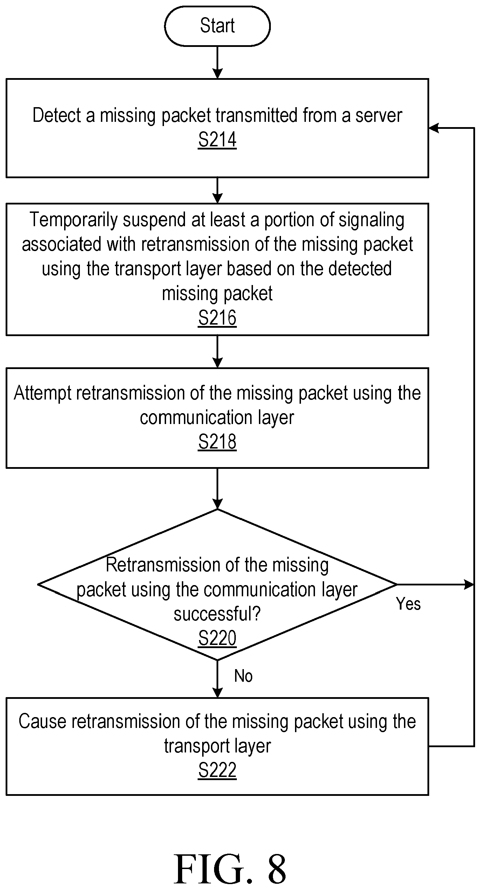

Processing circuitry 30 may be configured to control any of the methods and/or processes described herein and/or to cause such methods, signaling and/or processes to be performed, e.g., by middlebox 14. Processor 32 corresponds to one or more processors 32 for performing middlebox 14 functions described herein. Middlebox 14 includes memory 34 that is configured to store data, programmatic software code and/or other information described herein. In one or more embodiments, memory 34 is configured to store coordination code 36. For example, coordination code 36 includes instructions that, when executed by processor 32, causes processor 32 to perform the processes described in FIG. 8 and middlebox 14 processes and/or signaling described herein.

Endpoint node 16 includes one or more communication interfaces 38 for communication with one or more other endpoint nodes 16, device endpoint nodes 12, middlebox 14, and/or other elements of system 10. In one or more embodiments, endpoint node 16 is a server endpoint node. In one or more embodiments, communication interface 38 includes one or more transmitters and/or one or more receivers. Endpoint node 16 includes processing circuitry 40. Processing circuitry 40 includes processor 42 and memory 44. In addition to a traditional processor and memory, processing circuitry 40 may comprise integrated circuitry for processing and/or control, e.g., one or more processors and/or processor cores and/or FPGAs (Field Programmable Gate Array) and/or ASICs (Application Specific Integrated Circuitry). Processor 42 may be configured to access (e.g., write to and/or reading from) memory 44, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory). Such memory 44 may be configured to store code executable by processor 42 and/or other data, e.g., data pertaining to communication, e.g., configuration and/or address data of nodes, etc.

Processing circuitry 40 may be configured to control any of the methods and/or processes described herein and/or to cause such methods, signaling and/or processes to be performed, e.g., by endpoint node 16. Processor 42 corresponds to one or more processors 42 for performing endpoint node 16 functions described herein. Endpoint node 16 includes memory 44 that is configured to store data, programmatic software code and/or other information described herein. In one or more embodiments, memory 44 is configured to store endpoint code 46. For example, endpoint code 46 includes instructions that, when executed by processor 42, causes processor 42 to perform the signaling and/or processes describe herein with respect to endpoint node 16. In one or more embodiments, endpoint node 16 is a communication node, network node or other network element configured to perform the functions described herein with respect to endpoint node 16.

While one or more embodiments are described as using a communication layer such as an encryption layer provided by a communication protocol such as an encryption protocol such as Datagram Transport Layer Security (DTLS), the one or more embodiments are not limited to this arrangement. Rather, any communication protocol layer that allows for the use of sequence numbers in transmissions, signaling or messages can be used. In one or more embodiments, DTLS can be used even when not encrypting packets. Also, when DTLS encrypts packets, it is not possible for a middlebox infer the TCP stack signaling. Further, while one or more embodiments are described as using a transport layer such as a Transmission Control Protocol (TCP) layer, any transport layer with retransmission mechanism(s) can be used.

### Communication Protocol Stack

DTLS is a well-known communication protocol that can perform retransmission of lost packets independent of a system implementing TCP protocol. However, the absence of communication and coordination between the DTLS layer and TCP layer could disadvantageously lead to both of these layers performing retransmission independent of each other. For example, if the DTLS retransmission mechanism retrieves the DTLS packet and the TCP stack receives the packet - in other words, the TCP buffer is not full after the timer expires, then the TCP stack proceeds to the retransmission, this consumes unnecessary bandwidth and also reduces the throughput as endpoint node 16 will reduce its TCP window size. Typically, this will modify abruptly the packet rate, which affects the multimedia applications. In other words, the lack of communication and coordination between the DTLS layer and TCP layer leads to inefficiencies in the retransmission process where the packet may disadvantageously be retransmitted once by the DTLS layer and once by the TCP layer, or could induced additional delay.

### Communication Protocol, e.g., DTLS, retransmission coordinated by the communication protocol

In one embodiment of the disclosure, the communication layer such as an encryption layer or DTLS layer coordinates retransmission with the transport layer such as the TCP layer. In one or more embodiments, the communication layer is a layer that is configured to use sequence numbers in messaging, transmissions and/or signaling. In particular, this section describes a mechanism that temporarily suspends the TCP stack from proceeding with TCP retransmission when the DTLS stack notices or determines a packet has been lost, i.e., retransmission is coordinated by DTLS communicating instructions or commands to the TCP layer. One embodiment of this process where the communication protocol is DTLS and the transport protocol is TCP is as follows:
1. The DTLS retransmission is activated such that DTLS monitors for packet loss.
2. The DTLS stack receives DTLS packets and monitor the DTLS Sequence Number of the received packets.
3. The DTLS stack determines that DTLS Sequence Number N of a received packet is followed by DTLS Sequence Number N+2 of another received packet, i.e., a DTLS packet has been lost.
4. DTLS stack notifies or signals to the TCP stacks that the DTLS stack is proceeding with a DTLS Retransmission due to the detected lost packet.
5. Upon receiving the notification, TCP stack temporarily suspends TCP retransmission such that the TCP stack does not proceed to the transmission of the second and third TCP ACK. The TCP stack temporarily suspends the sending of TCP retransmission signaling during a determined period of time, or until it receives instruction from the DTLS stack.
   a. Case 1:
      1. DTLS stack provides the missing DTLS packet.
      2. Providing the missing packet to the TCP stack may constitute a signaling for the TCP stack to continue. Otherwise, the DTLS stack, in or more embodiments, notifies the TCP stack that the retransmission was successful.
   b. Case 2:
      1. DTLS stack does not retrieve the missing DTLS packet.
      2. DTLS stack notifies the TCP stack.
      3. The TCP stack sends the two additional TCP ACKs. In other words, TCP retransmission is re-activated.

Therefore, the DTLS stack and TCP stack interact with each other as to retransmission, with the DTLS stack sending instructions or commands to the TCP stack regarding retransmission.

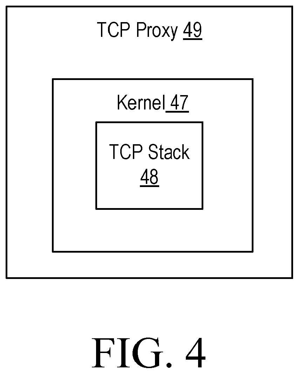

In one or more embodiments, as illustrated in FIG. 4, a TCP proxy 49 is implemented as a proxy to the TCP stack 48 that is within the operating system kernel 47, at device endpoint node 12, i.e., the user side, that hide these interactions to the TCP stack 48. This TCP proxy 49 would for example proceed to the reordering and retaining of the TCP packet with the missing sequence number as well as the following TCP packets to reach the TCP stack 48. By doing so, the TCP proxy 49 avoids the TCP stack 48 from proceeding to its signaling. For example, when a retransmission occurs, the TCP proxy 49 could stop filling the TCP buffer. This would be interpreted by the TCP stack 48 as an empty buffer and the prevent the TCP stack 48 from noticing the unordered packet caused by, for example, packet loss. As a result, the TCP stack 48 would not send a duplicated ACK. While this implementation avoids the interactions between the DTLS and TCP stacks as a TCP proxy 49 is used, it adds another layer every packet has to go through during the session. In addition, in case an unsuccessful DTLS retransmission occurs, the DTLS stack will not be able to inform the TCP stack 48 a DTLS retransmission has been initiated. This would prevent, for example, TCP stack 48 from directly sending three ACKs such that endpoint node 16 directly proceeds to the retransmission.

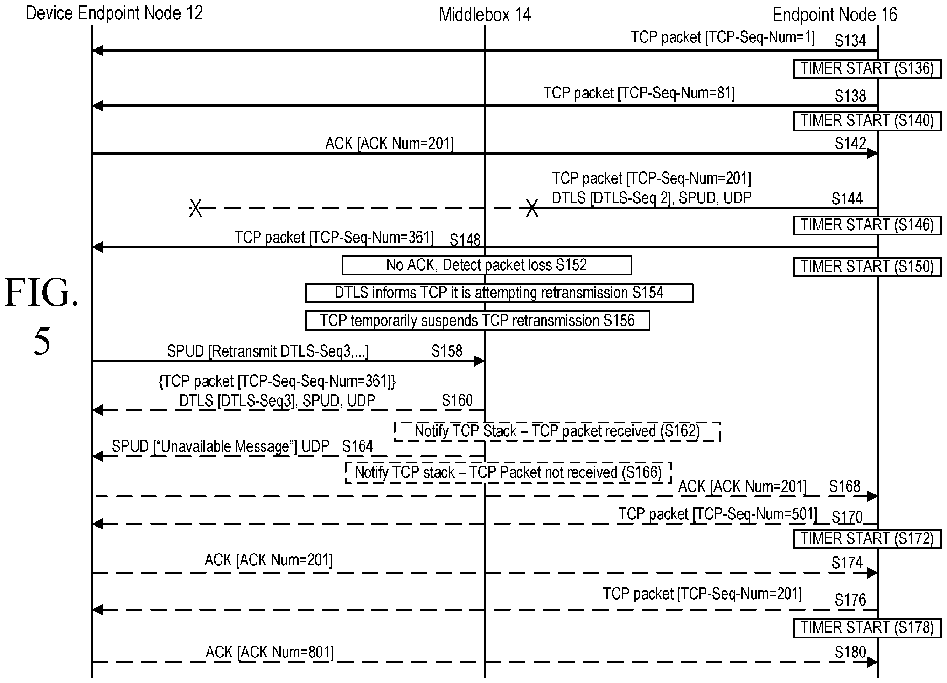

FIG. 5 is a flow diagram of an exemplary embodiment of retransmission coordinated by a communication protocol in accordance with the principles of the disclosure. As discussed in the example of FIG. 5, the communication protocol is DTLS while the transport protocol is TCP. However, other communication protocols and/or transport protocols may be implemented in accordance with the principles of the disclosure.

In one or more embodiments, the interactions between the TCP and SPUD/DTLS session may only occur in endpoint nodes of the main communication such as in device endpoint node 12 and endpoint node 16 as middlebox 14 (i.e., endpoint node of retransmission exchange) may not be aware of the existence of the TCP session or the main communication. However, retransmission may occur in the SPUD layer with a request to retransmit DTLS packets, as described herein. Such communications may include: device endpoint node 12 - middlebox 14 (when device endpoint node 12 notices an DTLS packet is missing or a TCP packet is missing during a download), middlebox 14 - endpoint node 16 (when middlebox 14 notices a DTLS packet is missing), and/or device endpoint node 12 - endpoint node 16 (if there is no middle box 14, or if this mechanism happens to be more efficient than the TCP retransmission.)

DTLS retransmission is activated such that the DTLS stack monitors for packet loss. Endpoint node 16 sends a packet including a TCP Segment such as TCP packet [TCP-Seq-Num=1], where the first Segment Number is one and the Segment length is one bit (S134). Further, each TCP sequence number of a received packet is mapped to a DTLS sequence number such that the DTLS stack can determine whether a packet has been lost based on the mapped sequence number. For example, if a received sequence number N in one packet is followed by another received sequence number N+2 of another packet. Endpoint node 16 initiates a timer, i.e., initiates TIMER START (S136). Each time a segment is sent, a timer is initiated and is reset each time an ACK is received.

Endpoint node 16 transmits a packet including TCP Segment 2, e.g., TCP packet [TCP-Seq-Num=81] (S138). Endpoint node 16 initiates a TIMER START (S140). Upon receipt of the packet including TCP Segment 2, device endpoint node 12 sends back an acknowledgement such as ACK [ACK Num=201] (S142). The acknowledgment number indicates the expected next sequence number to be received, which is 201 in this example.

Endpoint node 16 transmits a packet including TCP Segment 3 (e.g., TCP Packet [TCP-Seq-Num=201, DTLS [DTLS-Seq-2], SPUD, UDP) destined to device endpoint node 12, but TCP segment 3 (S144). Endpoint node 16 initiates a TIMER START (S146). Endpoint node 16 transmits a packet including TCP Segments 4, e.g., TCP packet [TCP-Seq-Num=361] (S148). Endpoint node 16 initiates a TIMER START (S150). This segment, i.e., segment 4, is not acknowledged as an ACK corresponding to the last received TCP segment is sent. The DTLS stack detects packet loss, i.e., middlebox 14 detects packet loss (S152). In one or more embodiments, as discussed above, each TCP sequence number is mapped to a DTLS sequence number such that received TCP segments 2 and 4 are mapped to the DTLS sequence numbers N and N+2, respectively. Using this mapping, the DTSL stack detects that an acknowledgement was not transmitted by device endpoint node 12 while TCP transmission has continued. In one or more embodiments, methods and processes other than the TCP-DTLS mapping are used to detect the lost packet.

DTLS informs TCP that it is attempting retransmission, i.e., the DTLS layer informs the TCP layer (S154). For example, in one or more embodiments, the DTLS stack notifies or signals to the TCP stacks that the DTLS stack is proceeding to a DTLS retransmission as the DTLS layer detects that a packet has been lost such that the DTLS layer immediately requests for retransmission from middlebox 14. By requesting the retransmission from the closet hop, which is middlebox 14 in one or more embodiments, faster retransmission is provided as the RTT between device endpoint node 12 and middlebox 14 is shorter than the RTT between device endpoint node 12 and endpoint node 16. In addition, congestion mechanism that slow down the transmission of data are avoided when the lost packet is interpreted as being due to congestion of the link. TCP temporarily suspends TCP retransmission (S156). For example, in one or more embodiments, upon receiving the notification, TCP stack does not proceed to the transmission of the second and third TCP ACK. In other words, the TCP stack temporarily suspends the sending of these TCP signals during a determined period of time, or until the TCP stack receives instruction from the DTLS stack.

Device endpoint node 12 requests the lost packet such as by using SPUD, e.g., SPUD [Retransmit DTLS-Seq3,...] (S158). In other words, the retransmission attempt that occurs is a DTLS retransmission attempt. If the retransmission of the packet is successful: middlebox 14 is able to retransmit the lost packet (e.g., TCP packet [TCP-Seq-Seq-Num=361], DTLS [DTLS-Seq 3]), middlebox 14 responds to device endpoint node 12 (S160). In other words, the DTLS stack provides the missing DTLS packet, and the missing packet is provided to the TCP stack that signals for the communication of new segments to continue. In one or more other embodiments, the DTLS stack may notify explicitly the TCP stack that the retransmission was successful (S162). Therefore, the lost packet is recovered. After this exchange, the connection continues. The TCP connection is not affected.

However, in one scenario, if the DTLS retransmission is unsuccessful such that middlebox 14 is not able to retransmit the lost packet, middlebox 14 informs device endpoint node 12 there is no packet cached such as by transmitting SPUD ["Unavailable Message"], UDP (S164). In this case, device endpoint node 12 will have to perform a TCP retransmission. In one or more embodiments, the DTLS stack notifies the TCP stack of the unsuccessful DTLS retransmission (S 166). With RTT between device endpoint node 12 and middlebox 14 much shorter than the RTT between device endpoint node 12 and endpoint node 16. In one or more embodiments, the additional retransmission does not impact the TCP Timeout Retransmission mechanism.

In another scenario, the DTLS retransmission is unsuccessful as middlebox 14 does not respond to the retransmission request. After one or more non-answered responses, device endpoint node 12 assumes that middlebox 14 is not providing this service and as such does not attempt anymore DTLS retransmission. In one or more embodiments, the DTLS stack notifies the TCP stack of the unsuccessful DTLS retransmission (S166). The retransmission is handled by TCP. With RTT between device endpoint node 12 and middlebox 14 much shorter than the RTT between device endpoint node 12 and endpoint node 16. In this case, this additional retransmission does not impact the TCP Timeout Retransmission mechanism.

If DTLS retransmission is unsuccessful, a duplicate ACK, e.g., ACK [ACK Num=201], is transmitted by device endpoint node 12 (S 168). The reception of a duplicated ACK is understood as congestion in the network. Endpoint node 16 transmits a packet including TCP Segments 5, e.g., TCP packet [TCP-Seg-Num=501] (S 170). This TCP segment is not acknowledged as ACK are sent when all TCP segments have been received. Endpoint node 16 initiates a TIMER START (S172). Device endpoint node 12 transmits a packet including a third ACK, e.g., ACK [ACK Num=201] (S174). Upon reception of the third ACK at endpoint node 16, endpoint node 16 retransmits the packet including TCP segment 3, e.g., retransmits TCP packet [TCP-Seq-Num=201] (S176). Endpoint node 16 initiates a TIMER START (S178). Device endpoint node 12 receives a packet including TCP segment 3 and responds with ACK segment 3, 4 and 5, e.g., responds with ACK [ACK Num=801] (S180). Dotted lines indicate one or more steps that are omitted in one or more embodiments.

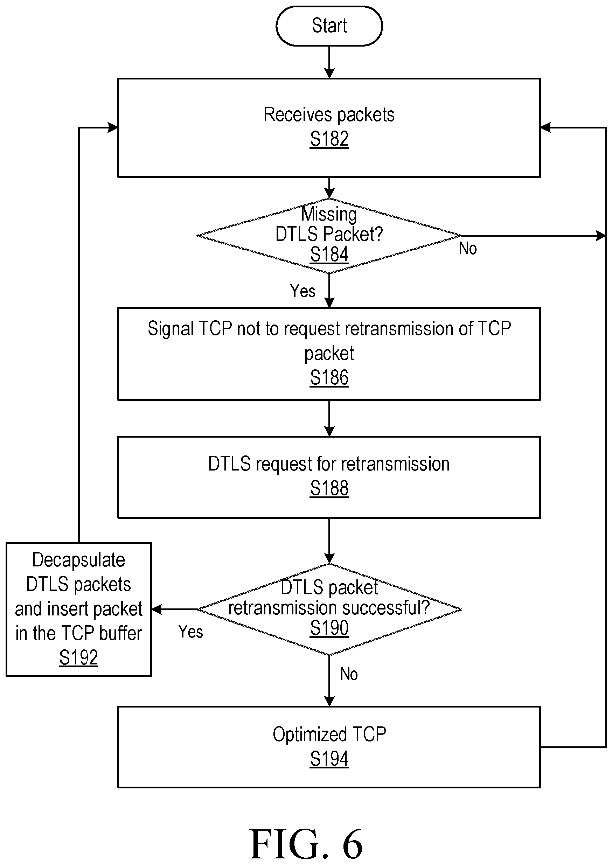

FIG. 6 is a flow diagram of one embodiment of the process of device code 26 for communication protocol coordinated retransmission in accordance with the principles of the disclosure. While the example of FIG. 6 is discussed with respect to the communication protocol being DTLS and the transport protocol being TCP, other communication protocols and/or transport protocols may be implemented in accordance with the principles of the disclosure. Processing circuitry 20 receives packets, e.g., device endpoint node 12 receives packets (Block S182). Processing circuitry 20 determines whether a DTLS packet is missing (Block S184). If the determination is made that a DTLS packet is not missing, the determination of Block S182 is repeated. If processing circuitry 20 determines a DTLS packet is missing, processing circuitry 20 signals TCP not to request retransmission of the TCP packet (Block S186). For example, processing circuitry 20 signals TCP to temporarily suspend TCP retransmission. Processing circuitry 20 performs a DTLS request for retransmission (Block S188). In one or more embodiments, the DTLS request is a SPUD [Retransmit DTLS...] message, examples of which are discussed herein.

Processing circuitry 20 determines whether DTLS packet retransmission is successful (Block S190). If DTLS packet retransmission is successful, processing circuitry 20 decapsulates the DTLS packet and inserts the packet in the TCP buffer (S192). If DTLS packet retransmission is not successful, processing circuitry 20 causes optimized TCP retransmission (Block S194). In one or more embodiments, optimized TCP retransmission causes two ACKs to be send to endpoint node 16 by device endpoint node 12. In one or more embodiments, optimized TCP retransmission causes two ACKs to be send to endpoint node 16 immediately such as without waiting for further signaling from endpoint node 16. While the processing circuitry 20 is described as performing the blocks of FIG. 6, in one or more embodiments, one or more of Blocks S182-S194 are performed by at least one of middlebox 14, endpoint node 16 and other entity in system 10.

### Communication protocol retransmission coordinated by the transport protocol

In this scenario, the communication protocol is DTLS, and the transport protocol is TCP. However, other communication protocols and/or transport protocols may be implemented in accordance with the principles of the disclosure. The DTLS retransmission is triggered by the TCP stack, i.e., TCP instruction or commands for the DTLS stack to attempt DTLS retransmission. In other words, when the TCP stack detects or determines a packet is lost, the TCP instructs the DTLS layer to attempt DTLS Retransmission, and in case of a failure, the TCP stack proceeds to the TCP signaling for TCP retransmission.

One advantage of attempting to perform retransmission from the next hop such as from middlebox 14 in one or more embodiments, i.e., between device endpoint node 12 and middlebox 14, is that this mechanism will avoid effecting global communications and traffic if local retransmission is successful. Another advantage of this implementation is that DTLS retransmission is performed on purpose. In one or more embodiments, only the TCP layer knows whether the data needs to be retransmitted as the DTLS layer does not have access to TCP. Therefore, a mapping between DTLS and TCP, described herein, allows the DTLS to track TCP packets and TCP segments. Suppose, for example that the session has multiple streams. Audio and video streams may not request a retransmission, but on the other hand, text, chat would need such retransmission. In this latter example, TCP may also get its instructions from the higher layers like hypertext transfer protocol (HTTP). Such mechanism is also useful for other transport mode like stream control transmission protocol (SCTP) for example.

In one or more embodiments, in order to implement the DTLS retransmission coordinated by TCP mechanism, the DTLS is required to bind a TCP Sequence Number with a DTLS Sequence Number. In other words, when the TCP stack realizes a TCP Sequence Number is missing, the TCP Stack is not aware of the corresponding DTLS sequence Number. The TCP stack may not even be aware that there is a DTLS stack and may need to determine whether there is an underlying DTLS stack. This could be done for example with a TCP option when the application opens, the TCP socket or TCP may be configured to make the determination of the DTLS sequence number.

The DTLS stack is configured to perform the following:
1. The DTLS stack receives DTLS packets.
2. The DTLS stack keeps track of the DTLS sequence Number.
3. The DTLS stack decrypts the packet.
4. The DTLS stack reads the TCP Sequence Number and binds it with the DTLS sequence Number.

The TCP stack is configured to perform the following:
5. The TCP stack receives TCP packets and monitors the TCP sequence Number.
6. The TCP stack notices that TCP Sequence Number N is followed by TCP Sequence Number N+2. A TCP packet has been lost.
7. The TCP stack notifies the DTLS stack that the TCP Sequence Number is missing and that a DTLS Retransmission is activated or commanded by the TCP stack.
8. The DTLS stack determines the DTLS Sequence Number associated with the TCP Sequence number received by the TCP stack.
9. The DTLS stack proceeds to a DTLS Retransmission for the missing DTLS Sequence Number.
10. Upon receiving the notification that the DTLS stack is attempting retransmission, the TCP stack temporarily suspends TCP retransmission such that the TCP stack does not proceed to the transmission of the second and third TCP ACK. The TCP stack temporarily suspends the sending these TCP signaling during a determined period of time, or until it receives instruction or notification(s) from the DTLS stack.
   a. Case 1:
      a1. DTLS stack provides the missing DTLS packet.
      a2. Providing the missing packet to the TCP stack may constitute a signaling to continue with segment transmission/reception. Otherwise, the DTLS stack may notify explicitly the TCP stack.
   b. Case 2:
      b1. DTLS stack does not retrieve the missing DTLS packet.
      b2. DTLS stack notifies the TCP stack.
      b3. The TCP stack sends the two additional TCP ACK, immediately such as without waiting for further signaling from endpoint node 16.

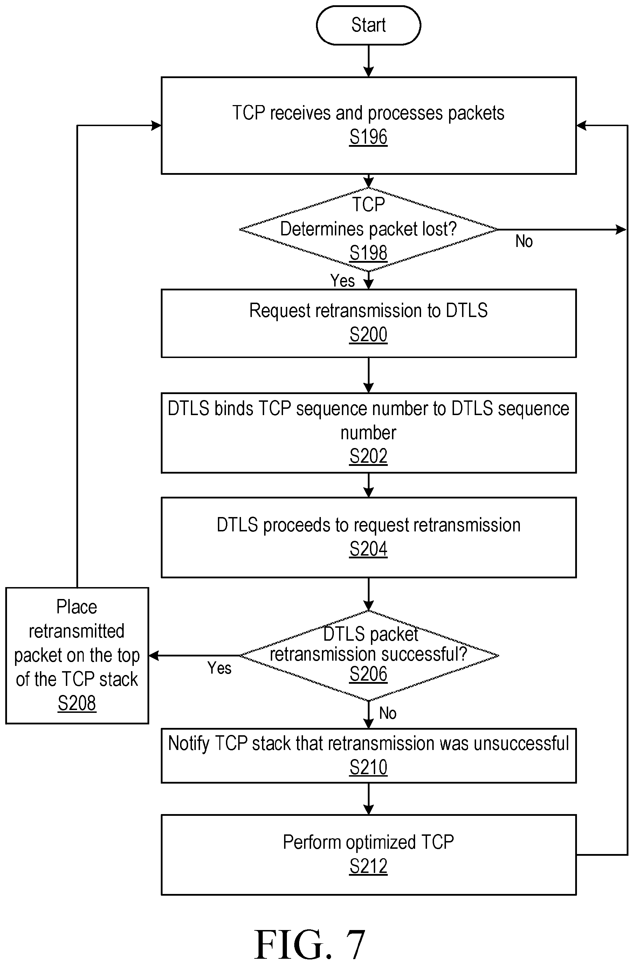

FIG. 7 is a flow diagram of another embodiment the process of device code 26 for transport protocol coordinated retransmission in accordance with the principles of the disclosure. While the example of FIG. 7 is discussed with the communication protocol being DTLS and the transport protocol being TCP, other communication protocols and/or transport protocols may be implemented in accordance with the principles of the disclosure.

Processing circuitry 20 receives TCP packets and processes the packets (Block S 196). Processing circuitry 20 determines whether a packet has been lost (Block S198). For example, in one embodiment, processing circuitry 20 determines two packets have been received with N and N+2 sequence numbers, respectively; therefore, the packet having sequence number N+1 has been lost. If the determination is made that the packet has not been lost, processing circuitry 20 repeats Block S196, i.e., continues to receive packets. If processing circuitry 20 determines a packet has been lost, a request for retransmission is made to DTLS (Block S200). For example, the TCP stack requests, instructs or commands that the DTLS stack attempt DTLS retransmission before TCP retransmission is attempted or reinitiated. Processing circuitry 20 binds the TCP sequence number to DTLS sequence number (Block S202). For example, DTLS binds TCP sequence number to DTLS sequence number. In one or more embodiments, the TCP layer determines packets loss occurred such as by determining there is a difference between the number of bits expected and the number of the packet such as "TCP-Seq-Num". Processing circuitry 20 then uses a table to map the sequence number of DTLS and/or number of the packet to a TCP sequence number and/or other information of the TCP packet, thereby being able to determine a packet is missing.

Processing circuitry 20 proceeds to request retransmission (Block S204). For example, the DTLS stack initiates or attempts retransmission, as described herein. Processing circuitry 20 determines if DTLS retransmission was successful (Block S206). For example, in one or more embodiments, a determination whether DTLS transmission was successfully is based on: notification from the TCP layer, receipt of the missing packet at the TCP stack or a lack of response from the request for DTLS retransmission. If processing circuitry 20 determines DTLS retransmission was successful, processing circuitry 20 places the retransmitted packet on the top of the TCP stack, thereby notifying the TCP stack that transmission was successful (Block S208).

Referring back to Block S206, if processing circuitry 20 determines DTLS retransmission was unsuccessful, processing circuitry 20 notifies the TCP stack that DTLS retransmission was unsuccessful (Block S210). Processing circuitry 20 causes optimized TCP retransmission (Block S212). In one or more embodiment, optimized TCP retransmission causes two ACKs to be sent to endpoint node 16 by device endpoint node 12. In one or more embodiment, optimized TCP retransmission causes two ACKs to be sent to endpoint node 16 immediately such as without having to receive signaling from endpoint node 16 to trigger transmission of both ACKs. While the processing circuitry 20 is described as performing the blocks of FIG. 7, in one or more embodiments, one or more of Blocks S 196-S212 are performed by middlebox 14, endpoint node 16 and/or other entity in system 10.

FIG. 8 is a flow diagram of an exemplary coordination process of coordination code 36 for coordinating interaction between a communication layer and a transport layer for retransmission in accordance with the principles of the disclosure. In one or more embodiments, the communication layer is provided by a datagram transport layer security (DTLS) communication protocol. In one or more embodiments, the transport layer is provided by a transport control protocol (TCP).

Processing circuitry 30 is configured to detect a missing packet from endpoint node 16 (Block S214). In one or more embodiments, detection of the missing packet destined for device endpoint node 12 includes: monitoring a plurality of transport layer packets, detecting a sequence number of at least one of the plurality of transport layer packets, and determining the missing packet occurred based on the detected sequence number of at least one of the plurality of transport layer packets. In one or more embodiments, the detection of the missing packet includes: monitoring a plurality of communication layer, e.g., encryption layer or DTLS layer, packets, detecting a sequence number of at least one of the plurality of communication layer packets, determining the missing packet occurred based on the detected sequence number of at least one of the plurality of communication layer packets.

Processing circuitry 30 is configured to temporarily suspend at least a portion of signaling associated with retransmission of the missing packet using the transport layer based on the detected missing packet (Block S216). In one or more embodiments, temporarily suspending at least a portion of signaling associated with retransmission of the missing packet using the transport layer includes notifying the communication layer that retransmission using the communication layer is expected. In one or more embodiments, temporarily suspending at least a portion of signaling associated with retransmission of the missing packet using the transport layer includes the communication layer notifying the transport layer that retransmission using the communication layer will be attempted. In one or more embodiments, temporarily suspending at least of portion of signaling associated with retransmission of the missing packet using the transport layer includes temporarily suspending the transmission of duplicate acknowledgments to endpoint node 16.

Processing circuitry 30 is configured to attempt retransmission of the missing packet using the communication layer (Block S218). Processing circuitry 30 is configured to determine if retransmission of the missing packet using the communication layer was successful (Block S220). If retransmission of the missing packet using the communication layer was successful, processing circuitry 30 performs the determination of Block S214. If retransmission of the missing packet using the communication layer was unsuccessful, processing circuitry 30 is configured to cause retransmission of the missing packet using the transport layer (Block S222). In one or more embodiments, in response to determining retransmission of the missing packet using the communication layer is unsuccessful, processing circuitry 30 causes the communication layer to notify the transport layer that the retransmission of the missing packet using the communication layer was unsuccessful. In other words, retransmission is attempted using the communication layer before attempting retransmission using the transport layer.

In one or more embodiments, middlebox 14 performs the following functions for retransmission:
1. Set CACHE_SIZE: the number of packets cached from the session.
2. Middlebox 14 caches the CACHE_SIZE last packets at the destination of device endpoint node 12.
3. When device endpoint node 12 sends a DTLS Retransmission request for Packet DTLS Sequence Number N.
   a) Case 1
      1. Request of type Retransmission is unknown to the DTLS stack.
      2. Ignore the request or Send an Error RESPONSE of type UNKNOWN_QUERY_TYPE.
   b) Case 2
      1. Request of type Retransmission is known to the DTLS stack AND DTLS Sequence Number N is in the cache.
      2. Respond with the requested packet.
   c) Case 3
      1. Request of type Retransmission is known to the DTLS stack AND DTLS Sequence Number N is NOT in the cache.
      2. Respond with an UNAVAILABLE PACKET Error.

In one or more embodiments, middlebox 14 is configured to detect the lost packet. Here, the packet is lost at the middlebox-endpoint node segment and the lost detection is performed by middlebox 14. In one or more embodiments, middlebox 14 only has access to the DTLS information (and not TCP) such that detection of the lost packet or suspicion of the lost packet is provided by monitoring the DTLS Sequence Numbers. In other words, middlebox 14, in one or more embodiments, will only be able to perform: the stand-alone DTLS transmission or the proxy version of the DTLS retransmission coordinated by DTLS.

In the case of device endpoint node 12, standalone DTLS retransmission may be limited, since on device endpoint node 12, the time between a packet is processed by the DTLS stack and then by the TCP stack is very small. On the other hand, when middlebox 14 detects the missing DTLS packet, the time between the detection occurs at middlebox 14 and the time the detection occurs at device endpoint node 12 depends on the latency between middlebox 14 and device endpoint node 12. In some cases, this latency may be significant for middlebox 14 to retrieve the packet from endpoint node 16, reorder to the DTLS packets and provide them to device endpoint node 12.

In this case, the great advantage of the service performed by middlebox 14 is that device endpoint node 12 is not even aware the packet has been lost and results from a retransmission. Note also that middlebox 14 may reorder the packets in order to ease the retransmission.

In one or more embodiment, DTLS retransmission by DTLS is coordinated by middlebox 14. When the DTLS retransmission is handled by DTLS stack on middlebox 14, then middlebox 14 is responsible to hold the communication, and buffer the packets in order to prevent device endpoint node 12 to proceed to a retransmission at the TCP layer.

In one or more embodiments, the steps may be performed by any entity in system 10 such as device endpoint node 12, middlebox 14, endpoint node 16, physical and/or logical entity located between device endpoint node 12 and endpoint node 16.

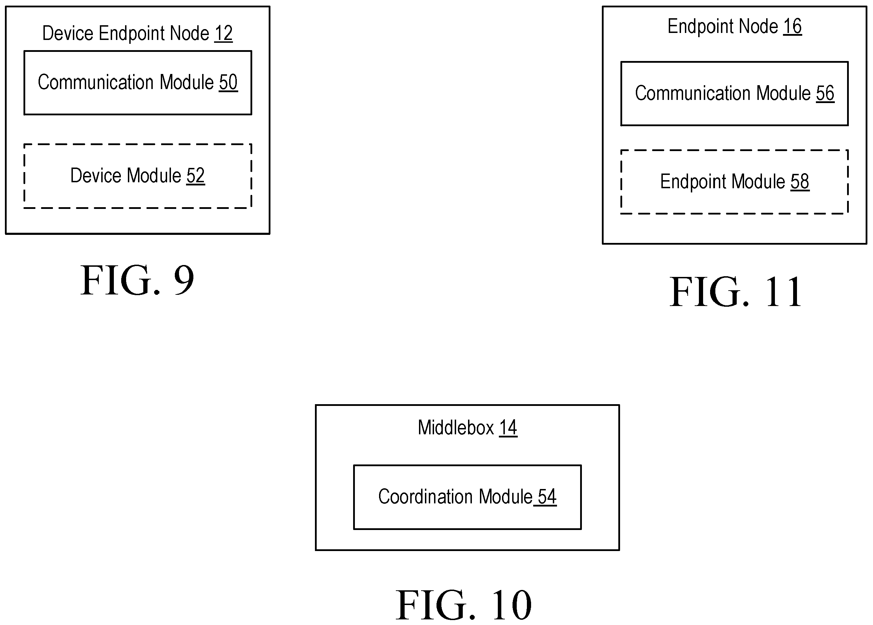

FIG. 9 is a block diagram of another exemplary embodiment of device endpoint node 12. Device endpoint node 12 includes a communication module 50 and device module 52 for performing functions as described for communication interface 18 and device code 26, respectively. In one embodiment, device module 52 performs Blocks S182 to S194, as described herein. In another embodiment, device module 52 performs Blocks S196 to S212, as described herein. In yet another embodiment, device module 52 performs Blocks S214 to S222, as described herein, such as when device endpoint node 12 is performing the coordination process.

FIG. 10 is a block diagram of another exemplary embodiment of middlebox 14 that includes coordination module 54 for performing functions as described with respect to coordination code 36. In one embodiment, coordination module 54 performs Blocks S214 to S222, as described herein.

FIG. 11 is a block diagram of another exemplary embodiment of endpoint node 16 that includes communication module 56 and endpoint module 58 for performing functions as described for communication interface 38 and endpoint code 46, respectively.

### Some Embodiments

According to one aspect of the disclosure, an endpoint node 12, 14 configured to access a transport layer and a communication layer different from the transport layer is provided. The communication layer is a layer configured to use sequence numbers in messaging. The endpoint node 12,14 includes processing circuitry 20, 30. The processing circuitry 20, 30 is configured to: detect a missing packet transmitted from another endpoint node 16; temporarily suspend at least a portion of signaling associated with retransmission of the missing packet using the transport layer based on the detected missing packet; attempt retransmission of the missing packet using the communication layer; and determine if retransmission of the missing packet using the communication layer is unsuccessful. Processing circuitry 20, 30 is further configured to, in response to determining retransmission of the missing packet using the communication layer is unsuccessful, cause retransmission of the missing packet using the transport layer.

According to one embodiment of this aspect, if the determination is made that retransmission of the missing packet using the communication layer is successful, ceasing retransmission of the missing packet using the transport layer. According to one embodiment of this aspect, the communication layer is a datagram transport layer security, DTLS, protocol layer. According to one embodiment of this aspect, the transport layer is a transport control protocol, TCP, layer. According to one embodiment of this aspect, the detection of the missing packet includes: monitoring a plurality of transport layer packets; detecting a sequence number of at least one of the plurality of transport packets; and determining the missing packet occurred based on the detected sequence number of at least one of the plurality of transport layer packets.

According to one embodiment of this aspect, the temporarily suspending of at least a portion of signaling associated with retransmission of the missing packet using the transport layer includes notifying the communication layer that retransmission using the communication layer is expected. According to one embodiment of this aspect, the detection of the missing packet includes: monitoring a plurality of communication layer packets; detecting a sequence number of at least one of the plurality of communication layer packets; and determining the missing packet occurred based on the detected sequence number of at least one of the plurality of communication layer packets.

According to one embodiment of this aspect, the temporarily suspending of at least a portion of signaling associated with retransmission of the missing packet using the transport layer includes the communication layer notifying the transport layer that retransmission using the communication layer will be attempted. According to one embodiment of this aspect, the processing circuitry 20, 30 is further configured to: in response to determining retransmission of the missing packet using the communication layer is unsuccessful, cause the communication layer to notify the transport layer that the retransmission of the missing packet using the communication layer was unsuccessful. According to one embodiment of this aspect, the temporarily suspending of at least of portion of signaling associated with retransmission of the missing packet using the transport layer includes temporarily suspending transmission of duplicate acknowledgments to the other endpoint node 16.

According to another aspect of the disclosure, a method for an endpoint node 12, 14 configured to access a transport layer and a communication layer different from the transport layer is provided. The communication layer is a layer configured to use sequence numbers in messaging. A missing packet transmitted from another endpoint node is detected. At least a portion of signaling associated with retransmission of the missing packet using the transport layer is temporarily suspended based on the detected missing packet. Retransmission of the missing packet using the communication layer is attempted. A determination if retransmission of the missing packet using the communication layer is unsuccessful is performed. In response to determining retransmission of the missing packet using the communication layer is unsuccessful, causing retransmission of the missing packet using the transport layer is caused.

According to one embodiment of this aspect, if the determination is made that retransmission of the missing packet using the communication layer is successful, ceasing retransmission of the missing packet using the transport layer. According to one embodiment of this aspect, the communication layer is a datagram transport layer security, DTLS, protocol layer. According to one embodiment of this aspect, the transport layer is a transport control protocol, TCP, layer. According to one embodiment of this aspect, the detection of the missing packet includes: monitoring a plurality of transport layer packets; detecting a sequence number of at least one of the plurality of transport packets; and determining the missing packet occurred based on the detected sequence number of at least one of the plurality of transport layer packets.

According to one embodiment of this aspect, the temporarily suspending of at least a portion of signaling associated with retransmission of the missing packet using the transport layer includes notifying the communication layer that retransmission using the communication layer is expected. According to one embodiment of this aspect, the detection of the missing packet includes: monitoring a plurality of communication layer packets; detecting a sequence number of at least one of the plurality of communication layer packets; and determining the missing packet occurred based on the detected sequence number of at least one of the plurality of communication layer packets. According to one embodiment of this aspect, the temporarily suspending of at least a portion of signaling associated with retransmission of the missing packet using the transport layer includes the communication layer notifying the transport layer that retransmission using the communication layer will be attempted.

According to one embodiment of this aspect,in response to determining retransmission of the missing packet using the communication layer is unsuccessful, the communication layer is caused to notify the transport layer that the retransmission of the missing packet using the communication layer was unsuccessful. According to one embodiment of this aspect, the temporarily suspending of at least the portion of signaling associated with retransmission of the missing packet using the transport layer includes temporarily suspending transmission of duplicate acknowledgments to the other endpoint node 16.

According to another aspect of the disclosure, an endpoint node 12, 14 configured to access a transport layer and a communication layer different from the transport layer is provided. The communication layer is a layer configured to use sequence numbers in messaging. The endpoint node 12, 14 includes a module 52, 54 configured to: detect a missing packet transmitted from another endpoint node 16; temporarily suspend at least a portion of signaling associated with retransmission of the missing packet using the transport layer based on the detected missing packet; attempt retransmission of the missing packet using the communication layer; determine if retransmission of the missing packet using the communication layer is unsuccessful; and in response to determining retransmission of the missing packet using the communication layer is unsuccessful, cause retransmission of the missing packet using the transport layer.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. An endpoint node (12, 14) configured to access a transport layer and a communication layer different from the transport layer, the transport layer being a transport control protocol, TCP, layer and the communication layer being a datagram transport layer security, DTLS, protocol layer, the endpoint node (12, 14) comprising:
processing circuitry (20, 30), the processing circuitry (20, 30) configured to:
detect a missing packet transmitted from another endpoint node (16);
temporarily suspend at least a portion of signaling associated with retransmission of the missing packet using the transport layer based on the detected missing packet;
request retransmission of the missing packet using the communication layer;
determine if retransmission of the missing packet using the communication layer is unsuccessful; and
in response to determining retransmission of the missing packet using the communication layer is unsuccessful, cause retransmission of the missing packet using the transport layer.

2. The endpoint node (12, 14) of Claim 1, wherein if the determination is made that retransmission of the missing packet using the communication layer is successful, ceasing retransmission of the missing packet using the transport layer.

3. The endpoint node (12, 14) of any one of Claims 1-2, wherein the detection of the missing packet includes:
monitoring a plurality of communication layer packets;
detecting a sequence number of at least one of the plurality of communication layer packets; and
determining the missing packet occurred based on the detected sequence number of at least one of the plurality of communication layer packets; or
wherein the detection of the missing packet includes:
monitoring a plurality of transport layer packets;
detecting a sequence number of at least one of the plurality of transport packets; and
determining the missing packet occurred based on the detected sequence number of at least one of the plurality of transport layer packets.

4. The endpoint node (12, 14) of any one of Claims 1-3, wherein the temporarily suspending of at least a portion of signaling associated with retransmission of the missing packet using the transport layer includes notifying the communication layer that retransmission using the communication layer is expected.

5. The endpoint node (12, 14) of any one of Claims 1-3, wherein the temporarily suspending of at least a portion of signaling associated with retransmission of the missing packet using the transport layer includes the communication layer notifying the transport layer that retransmission using the communication layer will be attempted.

6. The endpoint node (12, 14) of Claims 1-3, wherein the temporarily suspending of at least of portion of signaling associated with retransmission of the missing packet using the transport layer includes temporarily suspending transmission of duplicate acknowledgments to the other endpoint node (16).

7. The endpoint node (12, 14) of any one of Claims 1-6, wherein the processing circuitry (20, 30) is further configured to:
in response to determining retransmission of the missing packet using the communication layer is unsuccessful, cause the communication layer to notify the transport layer that the retransmission of the missing packet using the communication layer was unsuccessful.

8. A method for an endpoint node (12, 14) configured to access a transport layer and a communication layer different from the transport layer, the transport layer being a transport control protocol, TCP, layer and the communication layer being a datagram transport layer security, DTLS, protocol layer, the method comprising:
detecting a missing packet transmitted from another endpoint node (S214);
temporarily suspending at least a portion of signaling associated with retransmission of the missing packet using the transport layer based on the detected missing packet (S216);
requesting retransmission of the missing packet using the communication layer (S218);
determining if retransmission of the missing packet using the communication layer is unsuccessful (S220); and
in response to determining retransmission of the missing packet using the communication layer is unsuccessful, causing retransmission of the missing packet using the transport layer (S222).

9. The method of Claim 8, wherein if the determination is made that retransmission of the missing packet using the communication layer is successful, ceasing retransmission of the missing packet using the transport layer.

10. The method of any one of Claim 8-9, wherein the detection of the missing packet includes:
monitoring a plurality of communication layer packets;
detecting a sequence number of at least one of the plurality of communication layer packets; and
determining the missing packet occurred based on the detected sequence number of at least one of the plurality of communication layer packets.

11. The method of any one of Claims 8-10, wherein the detection of the missing packet includes:
monitoring a plurality of transport layer packets;
detecting a sequence number of at least one of the plurality of transport packets; and
determining the missing packet occurred based on the detected sequence number of at least one of the plurality of transport layer packets.

12. The method of any one of Claims 8-11, wherein the temporarily suspending of at least a portion of signaling associated with retransmission of the missing packet using the transport layer includes notifying the communication layer that retransmission using the communication layer is expected.

13. The method of any one of Claims 8-11, wherein the temporarily suspending of at least a portion of signaling associated with retransmission of the missing packet using the transport layer includes the communication layer notifying the transport layer that retransmission using the communication layer will be attempted.

14. The method of any one of Claims 8-11, wherein the temporarily suspending of at least the portion of signaling associated with retransmission of the missing packet using the transport layer includes temporarily suspending transmission of duplicate acknowledgments to the other endpoint node (16).

15. The method of any one of Claims 8-14, further comprising:
in response to determining retransmission of the missing packet using the communication layer is unsuccessful, causing the communication layer to notify the transport layer that the retransmission of the missing packet using the communication layer was unsuccessful.

## Patentansprüche

1. Endpunktknoten (12, 14), der zum Zugreifen auf eine Transportschicht und eine von der Transportschicht verschiedene Kommunikationsschicht konfiguriert ist, wobei die Transportschicht eine Transportsteuerungsprotokoll-,TCP-,Schicht ist, und die Kommunikationsschicht eine Datagramm-Transportschichtsicherheits-, DTLS-,Protokollschicht ist, wobei der Endpunktknoten (12, 14) umfasst:
Verarbeitungsschaltungsanordnung (20, 30), wobei die Verarbeitungsschaltungsanordnung (20, 30) konfiguriert ist zum:
Erkennen eines fehlenden Pakets, das von einem anderen Endpunktknoten (16) gesendet wird;
temporären Unterbrechen wenigstens eines Teils von Signalisierung, der mit Neuübertragung des fehlenden Pakets unter Verwendung der Transportschicht assoziiert ist, basierend auf dem erkannten fehlenden Paket,
Anfordern von Neuübertragung des fehlenden Pakets unter Verwendung der Kommunikationsschicht;
Bestimmen, ob Neuübertragung des fehlenden Pakets unter Verwendung der Kommunikationsschicht erfolglos ist; und
Veranlassen von Neuübertragung des fehlenden Pakets unter Verwendung der Transportschicht in Reaktion auf ein Bestimmen, dass Neuübertragung des fehlenden Pakets unter Verwendung der Kommunikationsschicht erfolglos ist.

2. Endpunktknoten (12, 14) nach Anspruch 1, wobei, wenn die Bestimmung gemacht wird, dass Neuübertragung des fehlenden Pakets unter Verwendung der Kommunikationsschicht erfolgreich ist, Stoppen von Neuübertragung des fehlenden Pakets unter Verwendung der Transportschicht.

3. Endpunktknoten (12, 14) nach einem der Ansprüche 1 bis 2, wobei die Erkennung des fehlenden Pakets umfasst:
Überwachen einer Mehrzahl von Kommunikationsschichtpaketen;
Erkennen einer Reihenfolgenummer mindestens eines der Mehrzahl von Kommunikationsschichtpaketen; und
Bestimmen des aufgetretenen fehlenden Pakets basierend auf der erkennten Reihenfolgenummer mindestens eines der Mehrzahl von Kommunikationsschichtpaketen; oder
wobei die Erkennung des fehlenden Pakets umfasst:
Überwachen einer Mehrzahl von Transportschichtpaketen;
Erkennen einer Reihenfolgenummer mindestens eines der Mehrzahl von Transportschichtpaketen; und
Bestimmen des aufgetretenen fehlenden Pakets basierend auf der erkennten Reihenfolgenummer mindestens eines der Mehrzahl von Transportschichtpaketen.

4. Endpunktknoten (12, 14) nach einem der Ansprüche 1 bis 3, wobei das temporäre Unterbrechen wenigstens eines Teils von Signalisierung, der mit Neuübertragung des fehlenden Pakets unter Verwendung der Transportschicht assoziiert ist, ein Benachrichtigen der Kommunikationsschicht umfasst, dass Neuübertragung unter Verwendung der Kommunikationsschicht erwartet wird.

5. Endpunktknoten (12, 14) nach einem der Ansprüche 1 bis 3, wobei das temporäre Unterbrechen wenigstens eines Teils von Signalisierung, der mit Neuübertragung des fehlenden Pakets unter Verwendung der Transportschicht assoziiert ist, umfasst, dass die Kommunikationsschicht die Transportschicht benachrichtigt, dass Neuübertragung unter Verwendung der Kommunikationsschicht versucht wird.

6. Endpunktknoten (12, 14) nach einem der Ansprüche 1 bis 3, wobei das temporäre Unterbrechen wenigstens eines Teils von Signalisierung, der mit Neuübertragung des fehlenden Pakets unter Verwendung der Transportschicht assoziiert ist, ein temporäres Unterbrechen von Übertragung von doppelten Bestätigungen an den anderen Endpunktknoten (16) umfasst.

7. Endpunktknoten (12, 14) nach einem der Ansprüche 1 bis 6, wobei die Verarbeitungsschaltung (20, 30) ferner konfiguriert ist zum:
Veranlassen, dass die Kommunikationsschicht die Transportschicht benachrichtigt, dass Neuübertragung des fehlenden Pakets unter Verwendung der Kommunikationsschicht erfolglos war, in Reaktion auf ein Bestimmen, dass Neuübertragung des fehlenden Pakets unter Verwendung der Kommunikationsschicht erfolglos ist.

8. Verfahren für einen Endpunktknoten (12, 14), der zum Zugreifen auf eine Transportschicht und eine von der Transportschicht verschiedene Kommunikationsschicht konfiguriert ist, wobei die Transportschicht eine Transportsteuerungsprotokoll-,TCP-,Schicht ist, und die Kommunikationsschicht eine Datagramm-Transportschichtsicherheits-, DTLS-,Protokollschicht ist, wobei das Verfahren umfasst:
Erkennen eines fehlenden Pakets, das von einem anderen Endpunktknoten (S214) gesendet wird;
temporäres Unterbrechen wenigstens eines Teils von Signalisierung, der mit Neuübertragung des fehlenden Pakets unter Verwendung der Transportschicht assoziiert ist, basierend auf dem erkannten fehlenden Paket (S216),
Anfordern von Neuübertragung des fehlenden Pakets unter Verwendung der Kommunikationsschicht (S218);
Bestimmen, ob Neuübertragung des fehlenden Pakets unter Verwendung der Kommunikationsschicht erfolglos ist (S220); und
Veranlassen von Neuübertragung des fehlenden Pakets unter Verwendung der Transportschicht in Reaktion auf ein Bestimmen, dass Neuübertragung des fehlenden Pakets unter Verwendung der Kommunikationsschicht erfolglos ist (S222).

9. Verfahren nach Anspruch 8, wobei, wenn die Bestimmung gemacht wird, dass Neuübertragung des fehlenden Pakets unter Verwendung der Kommunikationsschicht erfolgreich ist, Neuübertragung des fehlenden Pakets unter Verwendung der Transportschicht gestoppt wird.

10. Verfahren nach einem der Ansprüche 8 bis 9, wobei die Erkennung des fehlenden Pakets umfasst:
Überwachen einer Mehrzahl von Kommunikationsschichtpaketen;
Erkennen einer Reihenfolgenummer mindestens eines der Mehrzahl von Kommunikationsschichtpaketen; und
Bestimmen des aufgetretenen fehlenden Pakets basierend auf der erkennten Reihenfolgenummer mindestens eines der Mehrzahl von Kommunikationsschichtpaketen.

11. Verfahren nach einem der Ansprüche 8 bis 10, wobei die Erkennung des fehlenden Pakets umfasst:
Überwachen einer Mehrzahl von Transportschichtpaketen;
Erkennen einer Reihenfolgenummer mindestens eines der Mehrzahl von Transportschichtpaketen; und
Bestimmen des aufgetretenen fehlenden Pakets basierend auf der erkennten Reihenfolgenummer mindestens eines der Mehrzahl von Transportschichtpaketen.

12. Verfahren nach einem der Ansprüche 8 bis 11, wobei das temporäre Unterbrechen wenigstens eines Teils von Signalisierung, der mit Neuübertragung des fehlenden Pakets unter Verwendung der Transportschicht assoziiert ist, ein Benachrichtigen der Kommunikationsschicht umfasst, dass Neuübertragung unter Verwendung der Kommunikationsschicht erwartet wird.

13. Verfahren nach einem der Ansprüche 8 bis 11, wobei das temporäre Unterbrechen wenigstens eines Teils von Signalisierung, der mit Neuübertragung des fehlenden Pakets unter Verwendung der Transportschicht assoziiert ist, umfasst, dass die Kommunikationsschicht die Transportschicht benachrichtigt, dass Neuübertragung unter Verwendung der Kommunikationsschicht versucht wird.

14. Verfahren nach einem der Ansprüche 8 bis 11, wobei das temporäre Unterbrechen wenigstens des Teils von Signalisierung, der mit Neuübertragung des fehlenden Pakets unter Verwendung der Transportschicht assoziiert ist, ein temporäres Unterbrechen von Übertragung von doppelten Bestätigungen an den anderen Endpunktknoten (16) umfasst.

15. Verfahren nach einem der Ansprüche 8 bis 14, ferner umfassend:
Veranlassen, dass die Kommunikationsschicht die Transportschicht benachrichtigt, dass Neuübertragung des fehlenden Pakets unter Verwendung der Kommunikationsschicht erfolglos war, in Reaktion auf ein Bestimmen, dass Neuübertragung des fehlenden Pakets unter Verwendung der Kommunikationsschicht erfolglos ist.

## Revendications

1. Nœud de point d'extrémité (12, 14) configuré pour accéder à une couche de transport et à une couche de communication différente de la couche de transport, la couche de transport étant une couche de protocole de commande de transport, TCP, et la couche de communication étant une couche de protocole de sécurité de couche de transport de datagrammes, DTLS, le nœud de point d'extrémité (12, 14) comprenant :
une circuiterie de traitement (20, 30), la circuiterie de traitement (20, 30) étant configurée pour :
détecter un paquet manquant transmis depuis un autre nœud de point d'extrémité (16) ;
suspendre provisoirement au moins une portion de signalisation associée à une retransmission du paquet manquant en utilisant la couche de transport sur la base du paquet manquant détecté ;
demander une retransmission du paquet manquant en utilisant la couche de communication ;
déterminer si une retransmission du paquet manquant en utilisant la couche de communication a échoué ; et
en réponse à la détermination qu'une retransmission du paquet manquant en utilisant la couche de communication a échoué, provoquer la retransmission du paquet manquant en utilisant la couche de transport.

2. Nœud de point d'extrémité (12, 14) selon la revendication 1, dans lequel, s'il est déterminé qu'une retransmission du paquet manquant en utilisant la couche de communication est réussie, cesser une retransmission du paquet manquant en utilisant la couche de transport.

3. Nœud de point d'extrémité (12, 14) selon la revendication 1 ou 2, dans lequel la détection du paquet manquant inclut :
la surveillance d'une pluralité de paquets de couche de communication ;
la détection d'un numéro séquentiel d'au moins l'un parmi la pluralité de paquets de couche de communication ; et
la détermination de la survenance du paquet manquant sur la base du numéro séquentiel détecté d'au moins l'un parmi la pluralité de paquets de couche de communication ; ou
dans lequel la détection du paquet manquant inclut :
la surveillance d'une pluralité de paquets de couche de transport ;
la détection d'un numéro séquentiel d'au moins l'un parmi la pluralité de paquets de couche de transport ; et
la détermination de la survenance du paquet manquant sur la base du numéro séquentiel détecté d'au moins l'un parmi la pluralité de paquets de couche de transport.

4. Nœud de point d'extrémité (12, 14) selon l'une quelconque des revendications 1 à 3, dans lequel la suspension provisoire d'au moins une portion de signalisation associée à une retransmission du paquet manquant en utilisant la couche de transport inclut la notification de la couche de communication qu'une retransmission en utilisant la couche de communication est prévue.

5. Nœud de point d'extrémité (12, 14) selon l'une quelconque des revendications 1 à 3, dans lequel la suspension provisoire d'au moins une portion de signalisation associée à une retransmission du paquet manquant en utilisant la couche de transport inclut la couche de communication notifiant la couche de transport qu'une retransmission en utilisant la couche de communication va être tentée.

6. Nœud de point d'extrémité (12, 14) selon l'une quelconque des revendications 1 à 3, dans lequel la suspension provisoire d'au moins une portion de signalisation associée à une retransmission du paquet manquant en utilisant la couche de transport inclut la suspension provisoire d'une transmission d'accusés de réception dupliqués à l'autre nœud de point d'extrémité (16) .

7. Nœud de point d'extrémité (12, 14) selon l'une quelconque des revendications 1 à 6, dans lequel la circuiterie de traitement (20, 30) est en outre configurée pour :
en réponse à la détermination qu'une retransmission du paquet manquant en utilisant la couche de communication a échoué, amener la couche de communication à notifier la couche de transport que la retransmission du paquet manquant en utilisant la couche de communication a échoué.

8. Procédé pour un nœud de point d'extrémité (12, 14) configuré pour accéder à une couche de transport et à une couche de communication différente de la couche de transport, la couche de transport étant une couche de protocole de commande de transport, TCP, et la couche de communication étant une couche de protocole de sécurité de couche de transport de datagrammes, DTLS, le procédé comprenant :
la détection d'un paquet manquant transmis depuis un autre nœud de point d'extrémité (S214) ;
la suspension provisoire d'au moins une portion de signalisation associée à une retransmission du paquet manquant en utilisant la couche de transport sur la base du paquet manquant détecté (S216) ;
la demande d'une retransmission du paquet manquant en utilisant la couche de communication (S218) ;
la détermination si une retransmission du paquet manquant en utilisant la couche de communication a échoué (S220) ; et
en réponse à la détermination qu'une retransmission du paquet manquant en utilisant la couche de communication a échoué, le fait de provoquer une retransmission du paquet manquant en utilisant la couche de transport (S222).

9. Procédé selon la revendication 8, comprenant en outre, s'il est déterminé qu'une retransmission du paquet manquant en utilisant la couche de communication est réussie, la cessation d'une retransmission du paquet manquant en utilisant la couche de transport.

10. Procédé selon la revendication 8 ou 9, dans lequel la détection du paquet manquant inclut :
la surveillance d'une pluralité de paquets de couche de communication ;
la détection d'un numéro séquentiel d'au moins l'un parmi la pluralité de paquets de couche de communication ; et
la détermination de la survenance du paquet manquant sur la base du numéro séquentiel détecté d'au moins l'un parmi la pluralité de paquets de couche de communication.

11. Procédé selon l'une quelconque des revendications 8 à 10, dans lequel la détection du paquet manquant inclut :
la surveillance d'une pluralité de paquets de couche de transport ;
la détection d'un numéro séquentiel d'au moins l'un parmi la pluralité de paquets de couche de transport ; et
la détermination de la survenance du paquet manquant sur la base du numéro séquentiel détecté d'au moins l'un parmi la pluralité de paquets de couche de transport.

12. Procédé selon l'une quelconque des revendications 8 à 11, dans lequel la suspension provisoire d'au moins une portion de signalisation associée à une retransmission du paquet manquant en utilisant la couche de transport inclut la notification de la couche de communication qu'une retransmission en utilisant la couche de communication est prévue.

13. Procédé selon l'une quelconque des revendications 8 à 11, dans lequel la suspension provisoire d'au moins une portion de signalisation associée à une retransmission du paquet manquant en utilisant la couche de transport inclut la couche de communication notifiant la couche de transport qu'une retransmission en utilisant la couche de communication va être tentée.

14. Procédé selon l'une quelconque des revendications 8 à 11, dans lequel la suspension provisoire d'au moins une portion de signalisation associée à une retransmission du paquet manquant en utilisant la couche de transport inclut la suspension provisoire d'une transmission d'accusés de réception dupliqués à l'autre nœud de point d'extrémité (16).

15. Procédé selon l'une quelconque des revendications 8 à 14, comprenant en outre :
en réponse à la détermination qu'une retransmission du paquet manquant en utilisant la couche de communication a échoué, le fait d'amener la couche de communication à notifier la couche de transport que la retransmission du paquet manquant en utilisant la couche de communication a échoué.
